# EUROPEAN PATENT APPLICATION

(11) **EP 4 786 064 A1**
(43) Date of publication of application: **05.08.2026**
(21) Application number: 24871286.1
(22) Date of filing: 26.01.2024
(51) Int. Cl.: B07B 1/28, B07B 1/55

(54) **POWDER-PROCESSING DEVICE, AND POWDER-PROCESSING METHOD USING SAME**

(30) Priority: 25.09.2023 JP 2023160160
(71) Applicant: HITACHI HIGH-TECH CORPORATION, Tokyo 105-6409 (JP)
(72) Inventor: MISAWA Tomonari, Tokyo 100-8280 (JP)
(74) Representative: Mewburn Ellis LLP
(86) International application number: PCT/JP2024/002324
(87) International publication number: WO 2025/069468

(57) **Abstract**

The present invention provides the following configuration in order to provide a foreign matter removal method and a foreign matter removal device capable of processing a large amount of powder in a practical device size.

A powder-processing device including a base plate capable of placing the powder, the plurality of a processing parts for processing the powder placed on the base plate, and a base plate conveyance mechanism for conveying the base plate between the plurality of the processing parts. More preferably, the plurality of the processing parts includes at least: a) a powder supply part that places the powder to be processed on the base plate; b) a classification part that classifies the powder placed on the base plate according to the particle size; and c) a recovery part that recovers, from the powder subjected to the classification process, good-quality product which do not include foreign matter.

## Description

### Technical Field

The present invention relates to a powder-processing device for performing powder processes, such as removing foreign matter particles mixed in powder, and a powder-processing method using the same.

### Background Art

The technology described in Patent Literature 1 is known as a method for removing foreign matter particles mixed in powder. The foreign matter removal method described in Patent Literature 1 uses a transparent or translucent rotary table that rotates, mounted with powder on its surface, to transport it. Around this rotary table, the following are provided in the described order in the direction of rotation of the rotary table: a supply device that supplies powder to the rotary table surface; a photographing device that photographs the powder on the rotary table surface to detect bad-quality products; a good-quality product recovery nozzle that suctions to recover good-quality products from the photographed powder on the rotary table surface; and a bad-quality product removal nozzle that suctions to remove all powder on the rotary table surface after the good-quality products are recovered. A front-side photographing mechanism allows the photographing device to photograph powder on the surface of the rotary table from the front side of the rotary table. Similarly, a back-side photographing mechanism photographs the powder from the back side. At least, the front-side photographing mechanism is included.

### Citation List

### Patent Literature

Patent Literature 1: Japanese Unexamined Patent Application Publication No. 2004-157027

### Summary of Invention

### Technical Problem

The technology described in Patent Literature 1 allows powder to be mounted only near the circumference of the rotary table.

The diameter of the rotary table must be increased to increase the powder throughput. A large device size is required to process large amounts of powder.

The present invention has been made in view of the above-described problem, and aims at providing a powder-processing device capable of processing large amounts of powder in a practical device size, and a powder-processing method using the same.

### Solution to Problem

The present invention is configured as follows to achieve the above-described objective.

A powder-processing device including a base plate capable of placing powder, a plurality of processing parts for processing the powder placed on the base plate, and a base plate conveyance mechanism for conveying the base plate between the plurality of processing parts.

### Advantageous Effects of Invention

The present invention can provide a powder-processing device capable of processing large amounts of powder in a practical device size, and a powder processing method using the same.

### Brief Description of Drawings

Fig. 1 is a top view illustrating the schematic configuration of a powder processing device (foreign matter removal device) according to a first embodiment.
Fig. 2 is a cross-sectional view illustrating the structure of a supply part according to the first embodiment.
Fig. 3 is a cross-sectional view illustrating the structure of a classification part according to the first embodiment.
Fig. 4 is a cross-sectional view illustrating the structure of an imaging part according to the first embodiment.
Fig. 5 is a cross-sectional view illustrating the structure of a recovery part according to the first embodiment.
Fig. 6 is a cross-sectional view illustrating the structure of the classification part according to a second embodiment.
Fig. 7 is a top view illustrating a mask aperture shape according to the second embodiment.
Fig. 8 is a top view illustrating the schematic configuration of the powder processing device (foreign matter removal device) according to a third embodiment.
Fig. 9 is a cross-sectional view illustrating the structure of the recovery part according to the third embodiment.

### Description of Embodiments

The following describes embodiments of the present invention by referencing the drawings. The embodiments are examples for illustrative purposes only, and may be omitted or simplified as appropriate for clarity. The present invention can be embodied in a variety of other forms. Unless otherwise specified, each component may be singular or plural.

The position, size, shape, and range of each component illustrated in the drawings may not represent their actual position, size, shape, and range, to facilitate understanding of the invention. Accordingly, the present invention is not necessarily limited to the positions, sizes, shapes, and ranges disclosed in the drawings.

When a plurality of components have the same or similar functions, the components may be described using the same reference numeral with different subscripts. When the plurality of components need not be distinguished, the description may omit the subscripts.

### First Embodiment

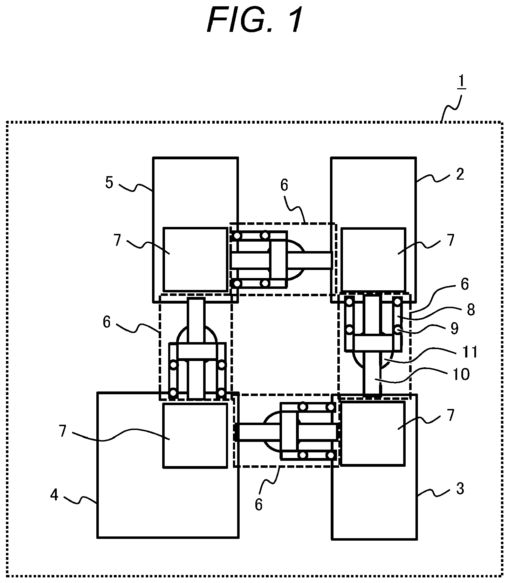

The first embodiment will be described based on Figs. 1 through 5. Fig. 1 is a top view illustrating the schematic configuration of a powder-processing device according to the first embodiment (in light of its purpose of removing foreign matter, the powder-processing device can also be referred to as a "foreign matter removal device" and will be referred to as the "foreign matter removal device" in the following embodiments.) According to the present embodiment, a foreign matter removal device 1 includes a supply part (also referred to as a "powder supply part") 2, a classification part 3, an imaging part 4, a recovery part 5, four base plate conveyance mechanisms 6, and four base plates 7.

The base plate 7 carries powder thereon and is conveyed among the processing parts (the supply part 2, the classification part 3, the imaging part 4, and the recovery part 5) by the base plate conveyance mechanism 6. The base plate 7 can be made of a plate material such as metal, ceramic, or resin, with sufficient thickness to minimize deformation during conveyance.

To prevent the powder from being contaminated, it is desirable to coat the surface of the base plate 7 with a fluororesin coating, PEEK coating, or DLC coating, or apply alumite treatment in the case of aluminum.

The base plate conveyance mechanism 6 conveys the base plate 7 among the processing parts and includes a hand 8, a suction pad 9, a linear motion mechanism 10, and a rotation mechanism 11. The base plate 7 placed at each processing part is adsorbed and secured to the hand 8, by the suction pad using negative pressure, for example, conveyed directly above the rotation mechanism 11 by the linear motion mechanism 10, rotated 180° by the rotation mechanism 11, and then conveyed to the next processing part by the linear motion mechanism 10.

As described in the above embodiment, there are four processing parts, such as the supply part 2, the classification part 3, the imaging part 4, and the recovery part 5. The four base plate conveyance mechanisms 6 connect the processing parts to convey the four base plates 7 in parallel. As described in "Advantageous Effects of Invention," the effect of the present invention is to "provide a powder-processing device capable of processing large amounts of powder in a practical device size, and a powder processing method using the same." To produce this effect, it is only necessary to include "a base plate capable of placing powder, the plurality of the processing parts that process the powder placed on the base plate, and a base plate conveyance mechanism that conveys the base plate between the plurality of the processing parts" as described in [Claim 1]. Obviously, the configuration described in the first embodiment is not essential.

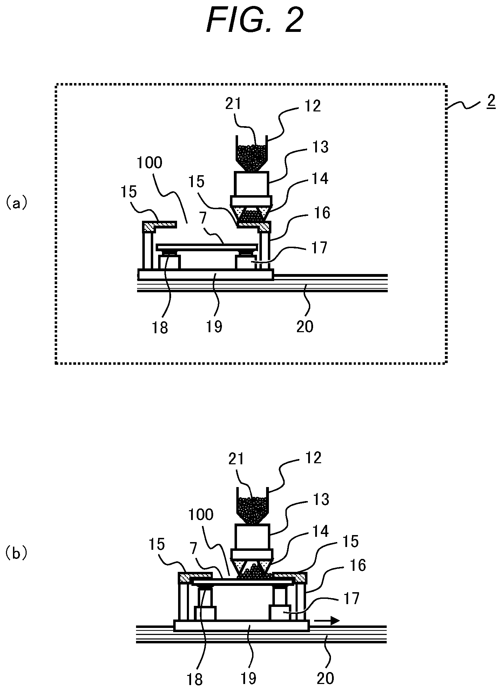

The supply part 2 mounts (or temporarily places) the powder to be processed on the base plate 7. Fig. 2 is a cross-sectional view illustrating the structure of the supply part 2 according to the first embodiment. Fig. 2(a) illustrates the setup state. Fig. 2(b) illustrates the state of supplying the powder. The supply part 2 includes a hopper 12, a feeder 13, a squeegee 14, a mask 15, a support rod 16, a lifting and lowering mechanism 17, a suction pad 18, a base plate 19, and a linear motion mechanism 20.

The mask 15 is a plate material with a central aperture 100. The aperture shape corresponds to the shape of a powder layer to be supplied onto the base plate 7. Typically, the aperture shape is rectangular. The mask 15 can be made of a plate material such as metal, ceramic, or resin. To prevent the powder from being contaminated, it is desirable to coat the surface of the mask 15 with a fluororesin coating, PEEK coating, or DLC coating, or apply alumite treatment in the case of aluminum. The mask 15 is secured to the base plate 19 via the support rod 16.

The hopper 12 stores a predetermined amount of powder 21. During the setup state illustrated in Fig. 2(a), the feeder 13 supplies a predetermined amount of the powder 21 in the hopper 12 to the space between the squeegee 14 and the mask 15. The base plate 7 is mounted above the lifting mechanism 17 by the base plate conveyance mechanism 6 and is secured by the suction pad 18.

During the powder supply, as illustrated in Fig. 2(b), the base plate 7 is raised by the lifting and lowering mechanism 17 and touches the mask 15. Then, the linear motion mechanism 20 horizontally moves the base plate 19. During the base plate setup, the powder 21 supplied between the squeegee 14 and the mask 15 is supplied onto the base plate 7. The powder supplied onto the base plate 7 is scraped off by the squeegee 14 and is spread to the same plate thickness as the mask 15. Consequently, a powder layer is formed on the base plate 7 so that the powder layer size corresponds to the aperture 100 in the mask 15.

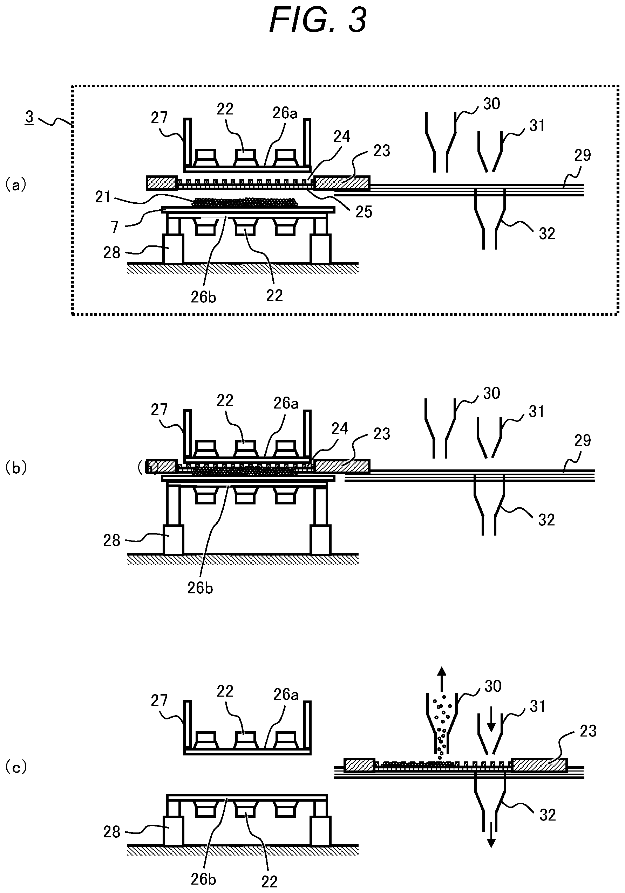

The classification part 3 performs classification to expose foreign matter particles to the powder layer surface. Fig. 3 is a cross-sectional view illustrating the structure of the classification part 3 according to the first embodiment. Fig. 3(a) illustrates the setup state. Fig. 3(b) illustrates the classification state. Fig. 3(c) illustrates the state of recovering the powder passing through the mesh.

The classification part 3 includes an ultrasonic vibrator 22, a mesh securing frame 23, a space-forming mesh 24, a classification mesh (sieve) 25, vibration plates 26a and 26b, a support rod 27, a lifting and lowering mechanism 28, a linear motion mechanism 29, a mesh-passing powder recovery nozzle 30, an air injection nozzle 31, and a clogging powder recovery nozzle 32.

The ultrasonic vibrator 22 is secured to the vibration plates 26a and 26b. The upper vibration plate 26a is secured to the support rod 27. The lower vibration plate 26b is secured to the lifting and lowering mechanism 28.

The space-forming mesh 24 and the classification mesh 25 are secured to the mesh securing frame 23.

The classification mesh 25 uses an opening size (coarseness) that is smaller than or approximately equal to the lower limit size of the foreign matter particle to be removed, and is larger than the particle circle diameter of the powder 21. The opening size of the classification mesh 25, even if slightly larger than the foreign matter particle size, can substantially remove foreign matter particles and improve the throughput. However, a mesh size smaller than the foreign matter particle size can ensure reliable removal and increase reliability. The space-forming mesh 24, mounted on top of the classification mesh 25, provides a thick mesh made of thick wire and forms a plurality of spaces to accommodate powder that passes through the classification mesh 25. The horizontal cross-sectional area of each space in the space-forming mesh 24 is larger than the cross-sectional area of each aperture in the classification mesh 25. Namely, the opening size of the space-forming mesh 24 is larger than the opening size of the classification mesh 25. A plurality of space-forming meshes 24 may be mounted on top of each other, depending on the volume of powder that passes through the classification mesh 25. To prevent the powder from being mixed with mesh-originated metallic foreign matter, it is preferable to use a resin mesh, such as nylon, as a material of the classification mesh 25 and the space-forming mesh 24.

The mesh securing frame 23 can be moved horizontally using the linear motion mechanism 29. The mesh securing frame 23 can move freely in the vertical direction, rise along with the base plate 7 that rises during classification, and can be pressed against the upper vibration plate 26a.

It is preferable to use a hard material such as metal for the vibration plates 26a and 26b to minimize energy attenuation of the ultrasonic vibrator. To prevent the powder from being contaminated, it is desirable to coat the surface of the vibration plates 26a and 26b with a fluororesin coating, PEEK coating, or DLC coating, or apply alumite treatment in the case of aluminum.

During the standby, as illustrated in Fig. 3(a), the base plate conveyance mechanism 6 (not shown in Fig. 3) mounts the base plate 7, carrying the powder 21, on the lower vibration plate 26b. The mesh securing frame 23 is mounted on top of the powder 21.

During the classification, as illustrated in Fig. 3(b), the lifting and lowering mechanism 28 raises the lower vibration plate 26b and presses the space-forming mesh 24, the classification mesh 25, the powder 21, and the base plate 7 to sandwich them between the upper and lower vibration plates 26a and 26b. Due to this function, the lifting and lowering mechanism 28 is also referred to as a "pressing mechanism." Then, high-frequency power is applied to the ultrasonic vibrator 22, causing it to vibrate. The powder 21 is thereby fluidized, and the classification mesh 25 sieves particles smaller than the opening size of the classification mesh 25. Application of vibration, while pressing against the powder 21, can fluidize even highly adhesive powders by grinding agglutinates. The classification time is set so that the thickness of the powder layer below the classification mesh 25 becomes smaller than or approximately equal to the size of the foreign matter particles to be removed. Then, the powder layer surface at least partly exposes the foreign matter particles to be removed.

During the classification, a control part (not shown) controls the lifting and lowering mechanism 28 to adjust the height of the vibration plate 26b to be able to follow a decrease in the powder layer thickness as the powder 21 passes through the classification mesh 25.

Alternatively, an elastic member such as a spring may be used to adjust the vibration plate 26b.

In the state of recovering the powder passing through the mesh, as illustrated in Fig. 3(c), the linear motion mechanism 29 moves the mesh securing frame 23 to the right in the drawing. Due to this function, the linear motion mechanism 29 is also referred to as a "sieve movement mechanism." At this time, the mesh-passing powder recovery nozzle 30 suctions to recover the powder 21, passing through the classification mesh 25, as a good-quality product free of foreign matter particles. Due to this function, the mesh-passing powder recovery nozzle 30 is also referred to as a "suction mechanism." Furthermore, the air injection nozzle 31 injects air toward the mesh. The clogging powder recovery nozzle 32 suctions to recover particles clogging the mesh. The base plate conveyance mechanism 6 discharges the base plate 7 carrying the powder that did not pass through the classification mesh 25.

The above embodiment describes the classification process using the sieve (mesh) as an example. However, there may be a case where a foreign matter, which is contained in the powder to be processed and needs to be sieved, has a particle size larger than the particle size of the good-quality product. In such a case, a pressure plate can crush the powder to expose the foreign matter on the powder layer surface. The imaging part 4 and the recovery part 5 (to be described) can separate the foreign matter. In this case, no sieve is used. This type of foreign matter separation method is also referred to as a "classification process" in the present invention. The present invention can use various well-known foreign matter separation methods depending on the types of foreign matter to be separated or the properties of the powder containing the foreign matter.

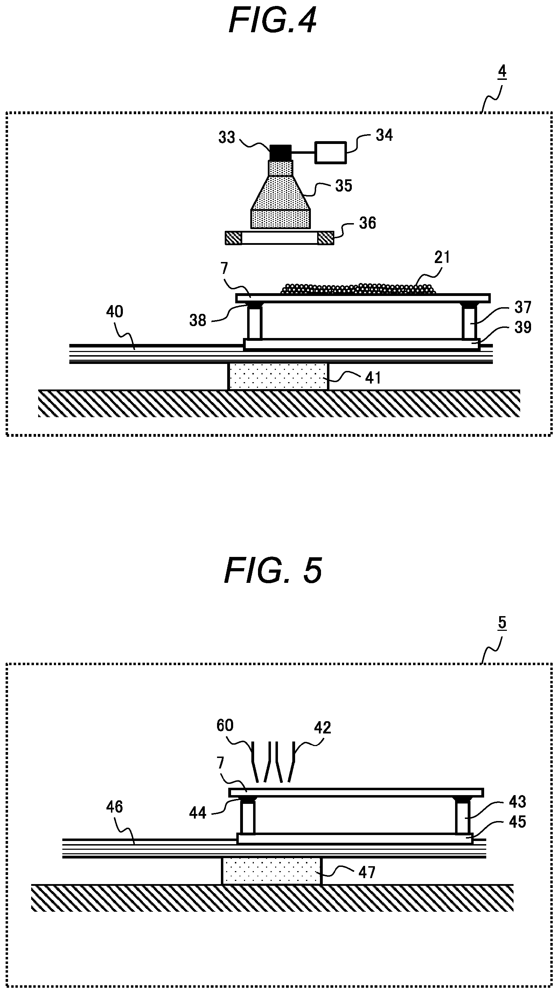

The imaging part 4 detects images of foreign matter particles exposed on the powder layer surface. Fig. 4 is a cross-sectional view illustrating the structure of the imaging part 4 according to the first embodiment. The imaging part 4 includes a lighting device 36, a lens 35, a CCD 33, an image processing part 34, a support rod 37, a base plate 39, and linear motion mechanisms 40 and 41. The lighting device 36 irradiates light onto the powder 21 from the imaging part 4 and uses a ring lighting device, for example. The lens 35 is attached to the CCD 33, which captures images of the powder surface at appropriate magnifications. The image processing part 34 analyzes the captured image to determine the presence or absence of foreign matter particles. Due to this function, the image processing part 34 is also referred to as a "determination mechanism." The method for discriminating foreign matter particles uses differences in particle shapes and the intensity or hue of reflected or scattered light, for example. A suction pad 38 secures the base plate 7, carrying the powder 21, to the support rod 37. The support rod 37 is secured to the base plate 39. The base plate 39 is secured to the linear motion mechanism 40.

The linear motion mechanism 40 is secured perpendicularly to the linear motion mechanism 41. Consequently, the base plate 7 can be moved horizontally and two-dimensionally to capture the entire surface of the powder 21.

The present embodiment has described the example of using two orthogonal linear motion mechanisms. It may also be advantageous to set the powder layer width smaller than or equal to the imaging visual field and use only one linear motion mechanism for imaging. Alternatively, a plurality of cameras can be used to widen the imaging visual field.

Based on the result determined by the imaging part 4, the recovery part 5 recovers a good-quality product free of foreign matter particles, or discards a bad-quality product containing foreign matter particles. Fig. 5 is a cross-sectional view illustrating the structure of the recovery part 5 according to the first embodiment. The recovery part 5 includes a good-quality product recovery nozzle 42, a bad-quality product recovery nozzle (also referred to as a foreign matter removal mechanism) 60, a support rod 43, a base plate 45, and linear motion mechanisms 46 and 47.

A suction pad 44 secures the base plate 7, carrying the powder 21, to the support rod 43. The support rod 43 is secured to the base plate 45. The base plate 45 is secured to the linear motion mechanism 46. The linear motion mechanism 46 is secured perpendicularly to a linear motion mechanism 47. If the imaging part 4 determines the presence of foreign matter particles, the linear motion mechanisms 46 and 47 move the area, where the foreign matter particles are detected, below the bad-quality product recovery nozzle 60 for suction and recovery. After the foreign matter particles are recovered, the good-quality product recovery nozzle 42 recovers the remaining powder. Favorably, the tip size of the bad-quality product recovery nozzle 60 may be as small as possible to minimize the recovery of powder other than foreign matter particles. However, to prevent nozzle clogging, the tip size is favorably set to at least three times or more of the diameter of a foreign matter particle to be removed. The good-quality product recovery nozzle 42 is favorably wide to shorten the suction and recovery time.

The recovery part 5 recovers to remove the powder 21 from the base plate 7, which is then introduced again to the supply part 2 by the base plate conveyance mechanism 6 (not shown in Fig. 5).

The present embodiment has described the example of using two orthogonal linear motion mechanisms. It may also be advantageous to use only one linear motion mechanism, widen the good-quality product recovery nozzle 42 and the bad-quality product recovery nozzle 60, and move only one axis for recovery.

As above, the present embodiment can increase the ratio of the powder mounting area to the device area and process large amounts of powder at a practical device size.

The present embodiment has described the example of performing the classification before the powder is introduced to the imaging part 4. Instead of the classification, it may also be advantageous to spread a powder layer thinly by pressing or scraping without using the mesh. The present embodiment has described the example of the base plate conveyance mechanism by combining the linear motion mechanism and the rotation mechanism. It may also be advantageous to use a conveyance mechanism including a belt conveyor.

### Second Embodiment

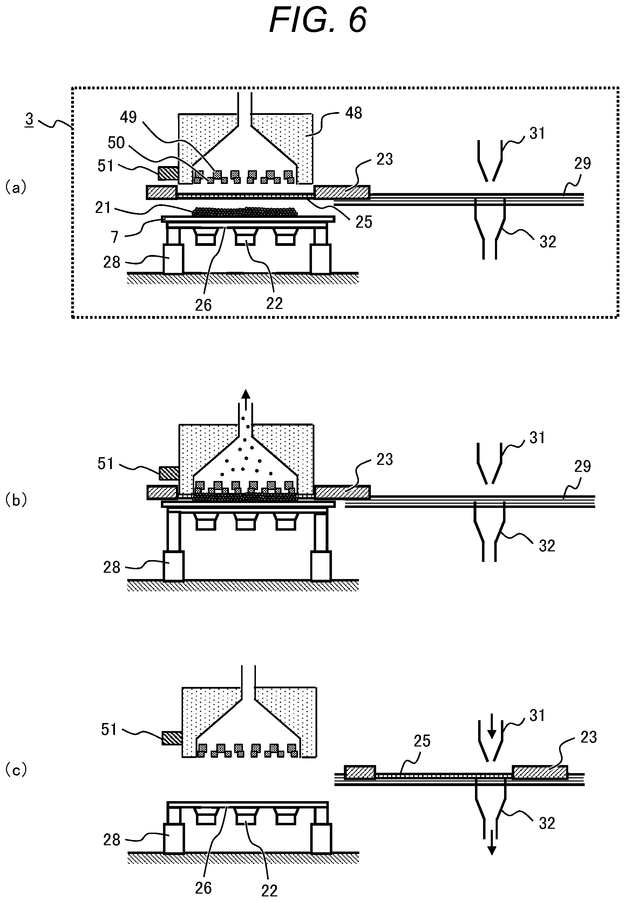

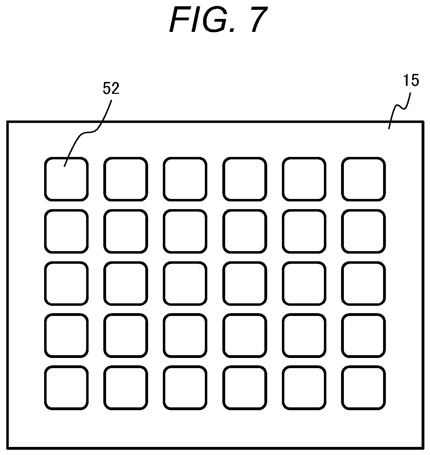

The second embodiment will be described based on Figs. 6 and 7. Fig. 6 is a cross-sectional view illustrating the structure of the classification part according to the second embodiment. There may be a case of thickening a powder layer placed on the base plate to increase the throughput. In such a case, according to the present embodiment, the space-forming mesh needs to be thickened or a plurality of space-forming meshes need to be stacked to accommodate the corresponding amount of powder. However, in this case, the space-forming mesh absorbs a large amount of vibration energy, decreasing the speed at which the powder passes through the classification mesh. The second embodiment eliminates the need for a space-forming mesh and improves throughput by suctioning to recover the powder, passing through the classification mesh, at the same time as the classification. The overall configuration of the foreign matter removal device according to the second embodiment is equal to that of the first embodiment illustrated in Fig. 1, but differs from the first embodiment in the configuration of the classification part 3 and the aperture shape of the mask 15 in the supply part 2.

Fig. 6(a) illustrates the setup state. Fig. 6(b) illustrates the classification state. Fig. 6(c) illustrates the mesh cleaning state. The classification part 3 according to the second embodiment includes the ultrasonic vibrator 22, the mesh securing frame 23, the classification mesh 25, the vibration plate 26, the lifting and lowering mechanism 28, the linear motion mechanism 29, the air injection nozzle 31, the clogging powder recovery nozzle 32, a suction housing 48, apertured plates 49 and 50, and an ultrasonic vibrator 51. The ultrasonic vibrator 22, the classification mesh 25, the mesh securing frame 23, and the vibration plate 26 are equal to those in the first embodiment, and therefore will not be described below.

Two apertured plates 49 and 50 are attached to the suction housing 48. The apertured plate flattens the shape of the classification mesh 25 when it is pressed against the powder. A highly rigid plate includes a plurality of vertically pierced apertures for powder suction. To suppress uneven suction due to open or closed positions, it is beneficial to reduce the size of each aperture and densely arrange them, thereby increasing the aperture ratio. However, this may decrease the rigidity and cause deformation during pressing. A deformed apertured plate deforms the classification mesh, changes the mesh aperture shape, and fails to provide the expected classification performance. The classification meshes, whose opening size is smaller than or equal to 100 micrometers, are often used for electrode materials for lithium-ion batteries whose average particle size ranges from several to tens of micrometers. However, such the meshes are less rigid and may be broken if deformed significantly. As a solution, two apertured plates with different the opening sizes and aperture ratios are used to suppress an uneven suction and ensure rigidity. The apertured plate 50 is smaller than the apertured plate 49 in opening sizes, thus providing a highly dense arrangement and increasing the aperture ratio.

To prevent metallic foreign matter from being mixed in the powder 21, the apertured plates 49 and 50, and the suction housing 48 are favorably made of non-metallic materials such as resin. To ensure sufficient rigidity, however, it may be advantageous to use metals such as stainless steel or aluminum. In this case, it is desirable to form a non-metallic layer, such as a resin or fluororesin coating or a DLC coating, on locations in contact with the powder 21. The apertured plate 50 may use a resin mesh, such as nylon, if the apertured plate 49 alone provides sufficient rigidity.

During the standby, as illustrated in Fig. 6(a), the base plate conveyance mechanism 6 (not shown in Fig. 6) mounts the base plate 7, carrying the powder 21, on the vibration plate 26. The mesh securing frame 23 is mounted on top of the powder 21.

During the classification, as illustrated in Fig. 6(b), the lifting and lowering mechanism 28 raises the vibration plate 26. The vibration plate 26 and the apertured plates 49 and 50 press the classification mesh 25, the powder 21, and the base plate 7. Then, high-frequency power is applied to the ultrasonic vibrator 22, causing it to vibrate. The powder is thereby fluidized, and the classification mesh 25 sieves particles smaller than the opening size of the classification mesh 25. The application of the vibration, while pressing against the powder 21, can fluidize even the highly adhesive powders by grinding agglutinates. The suction, performed simultaneously with applying vibration, suctions to recover the powder 21, passing through the classification mesh 25, via the suction housing 48. The ultrasonic vibrator 51 attached to the suction housing 48 applies vibration to further promote fluidization and increase the speed of passing through the classification mesh 25. The classification time is set so that the thickness of the powder layer below the mesh size 25 becomes smaller than or approximately equal to the size of the foreign matter particles to be removed. Consequently, the foreign matter particles to be removed are at least partially exposed on the surface of the powder layer.

During the classification, the control part (not shown) controls the lifting and lowering mechanism 28 to adjust the height of the vibration plate 26 to be able to follow a decrease in the powder layer thickness as the powder 21 passes through the classification mesh 25. Alternatively, the elastic member such as the spring may be used to adjust the vibration plate 26.

During the mesh cleaning, as illustrated in Fig. 6(c), the linear motion mechanism 29 moves the mesh securing frame 23 to the right in the drawing. At this time, the air injection nozzle 31 injects air toward the mesh. The clogging powder recovery nozzle 32 suctions to recover particles clogging the mesh. Due to this function, the air injection nozzle 31 is also referred to as a "cleaning mechanism." The first embodiment performs this operation at each classification cycle. However, according to the present embodiment, cleaning may be performed based on a predetermined number of the classification cycles if the mesh shows a low probability of clogging.

Fig. 7 is a top view illustrating the aperture shape of the mask 15 according to the second embodiment. The mask 15 includes a plurality of aperture parts 52. It is possible to form a plurality of powder layers, sized equally to the apertures 52, on the base plate 7. During the classification, the suction of the powder 21 requires generating an airflow from the outside toward the suction housing 48. If the powder layer densely spreads all over the surface (such as in the first embodiment), the center of the powder layer lacks a path for air to enter, disabling the suction. Meanwhile, the present embodiment can form an airflow path to the center of the base plate 7 and suction the powder throughout the entire surface.

As above, the present embodiment suctions to recover the powder 21, passing through the classification mesh 25, simultaneously with the classification, thereby eliminating the need for the space-forming mesh 24 and improving throughput.

The present embodiment has described the example of mounting two apertured plates 49 and 50 with different apertures. However, a single apertured plate may be used if it is possible to ensure the flatness of the classification mesh 25 and suppress an uneven suction.

### Third Embodiment

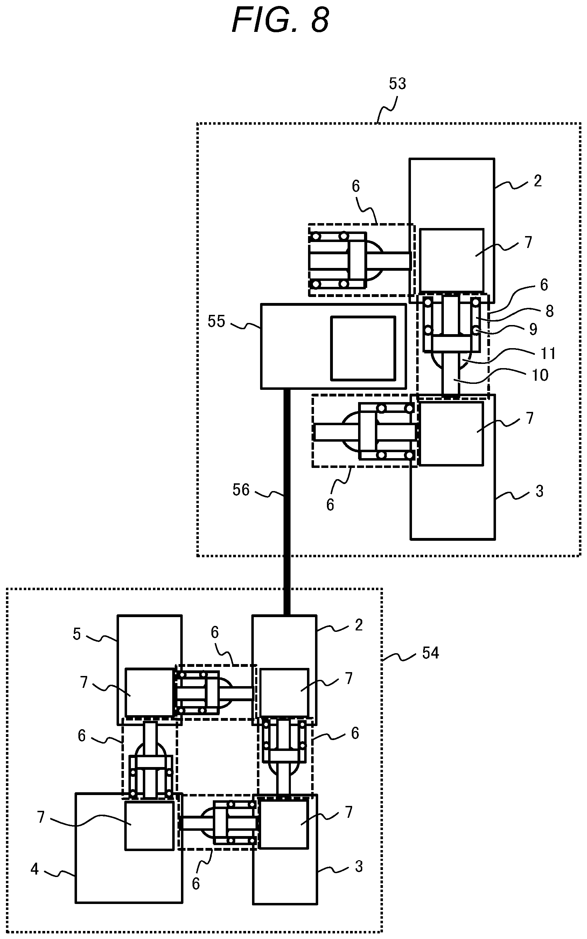

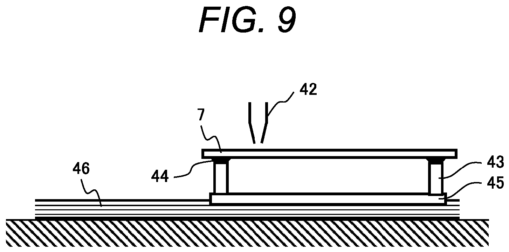

The third embodiment will be described based on Figs. 8 and 9. For example, the first and second embodiments need to narrow the field of view and increase the imaging resolution to detect small foreign matter particles. Depending on the circumstances, the imaging throughput may not be sufficient to meet the required amount. As a solution, the present embodiment performs primary classification to reduce the amount of powder required for imaging and improve throughput.

Fig. 8 is a top view illustrating the schematic configuration of the foreign matter removal device according to the third embodiment. The foreign matter removal device 1 includes a primary classification unit 53, a foreign matter removal unit 54, and a transport system 56.

The primary classification unit 53 includes the supply part 2, the classification part 3, a recovery part 55, and the base plate conveyance mechanism 6, and performs the classification only, without detecting foreign matter based on imaging. The supply part 2 and the classification part 3 are configured equally to the first or second embodiment. Fig. 9 is a cross-sectional view illustrating the configuration of the recovery part 55. The recovery part 55 includes the recovery nozzle 42, the support rod 43, the base plate 45, and the linear motion mechanism 46.

The recovery nozzle 42 uses a wide nozzle whose width is greater than or equal to the powder layer width. The suction pad 44 secures the base plate 7, carrying the powder 21, to the support rod 43. The support rod 43 is secured to the base plate 45. The base plate 45 is secured to the linear motion mechanism 46. After the classification process, the recovery nozzle 42 suctions to recover the powder remaining on the base plate 7 while the linear motion mechanism 46 moves the base plate 7. The recovery part 55 recovers to remove the powder 21 from the base plate 7, which is then introduced again to the supply part 2 by the base plate conveyance mechanism 6. The transport system 56 introduces the powder suctioned and recovered by the recovery part 55 into the hopper 12 of the supply part 2 of the foreign matter removal unit 54.

The foreign matter removal unit 54 is configured equally to the first or second embodiment. The powder introduced into the hopper 12 passes through the classification part 3 and the imaging part 4. Then, the recovery part 5 removes foreign matter from the powder.

The present embodiment performs primary classification in advance to improve throughput.

The present embodiment has described the example of using the transport system 56 to directly transport the powder from the primary classification unit 53 to the foreign matter removal unit 54. It may also be advantageous to provide an intermediate tank, store the powder recovered by the primary classification unit in the intermediate tank, and then introduce the powder into the foreign matter removal unit 54.

### Reference Signs List

1: foreign matter removal device, 2: supply part, 3: classification part, 4: imaging part, 5: recovery part, 6: base plate conveyance mechanism, 7: base plate, 12: hopper, 13: feeder, 14: squeegee, 15: mask, 22: ultrasonic vibrator, 23: mesh securing frame, 24: space-forming mesh, 25: classification mesh, 26a, 26b: vibration plate, 30: mesh-passing powder recovery nozzle, 31: air injection nozzle, 32: clogging powder recovery nozzle, 33: CCD, 34: image processing part, 35: lens, 36: lighting device, 42: recovery nozzle, 60: bad-quality product recovery nozzle, 48: suction housing, 49, 50: aperture plate, 53: primary classification unit, 54: foreign matter removal unit, 56: transport system

## Claims

1. A powder-processing device comprising:
a base plate capable of placing powder;
a plurality of processing parts that processes powder placed on the base plate; and
a base plate conveyance mechanism that conveys the base plate between a plurality of the processing parts.

2. The powder-processing device according to claim 1, wherein a plurality of the processing parts includes at least:
a) a powder supply part that places the powder to be processed on the base plate;
b) a classification part that classifies the powder placed on the base plate based on particle sizes; and
c) a recovery part that recovers a good-quality product free of foreign matter from the classified powder.

3. The powder-processing device according to claim 1, comprising:
a plurality of the base plate conveyance mechanisms,
wherein the base plate conveyance mechanisms can independently convey the different base plates.

4. The powder-processing device according to claim 1,
wherein the base plate is conveyed to circulate among a plurality of the processing parts.

5. The powder-processing device according to claim 2,
wherein the classification part includes at least a vibration mechanism that vibrates a sieve for classifying the powder, and a pressing mechanism that presses the sieve against the powder while the vibration mechanism vibrates the sieve.

6. The powder-processing device according to claim 5, comprising:
a suction mechanism to suction powder that is pressed by the pressing mechanism and thereby passes through the sieve.

7. The powder-processing device according to claim 5,
wherein a plurality of vertically pierced apertures is formed in the pressing mechanism in contact with the sieve.

8. The powder-processing device according to claim 2,
wherein the powder supply part includes a mask that divides the powder into a plurality of blocks and places the blocks on the base plate.

9. The powder-processing device according to claim 2,
wherein the classification part includes a cleaning mechanism that cleans a sieve after a classification process.

10. The powder-processing device according to claim 2, comprising:
a sieve movement mechanism that moves a sieve, used for a classification process in the classification part, to the recovery part and recovers the powder that has passed through the sieve.

11. The powder-processing device according to claim 2, comprising:
an imaging part that images the powder classified in the classification part,
wherein the imaging part includes a determination mechanism that determines, based on a captured image, whether the classified powder contains foreign matter.

12. The powder-processing device according to claim 11,
wherein the recovery part includes a foreign matter removal mechanism that recovers a good-quality product free of foreign matter, based on the determination result of the determination mechanism in the imaging part, and removes powder that the determination mechanism determines to contain foreign matter.

13. A powder-processing method using the powder-processing device according to any one of claims 1 to 12.

14. A powder-processing method using a powder-processing device including:
a base plate capable of placing powder;
a plurality of processing parts for processing the powder placed on the base plate; and
a base plate conveyance mechanism for conveying the base plate between a plurality of the processing parts,
a plurality of the processing parts including at least:
a) a powder supply part that places the powder to be processed on the base plate;
b) a classification part that classifies the powder placed on the base plate based on particle sizes; and
c) a recovery part that recovers a good-quality product free of foreign matter from the classified powder,
the powder-processing method comprising the step of conveying the powder to be processed in the order of the powder supply part, the classification part, and the recovery part.
